# FASCICULE DE BREVET EUROPEEN

(11) **EP 1 405 496 B1**
(45) Date de publication et mention de la délivrance du brevet: **27.09.2006**
(21) Numéro de dépôt: 02747546.6
(22) Date de dépôt: 20.06.2002
(51) Int. Cl.: H04M 1/66, H04Q 7/32

(54) **MODULE D'IDENTIFICATION D'ABONNE ET TERMINAL ASSOCIE**
SIM-KARTE UND EIN FUNKTELEFON DAFÜR
SUBSCRIBER IDENTITY MODULE AND TERMINAL THEREFOR

(30) Priorité: 28.06.2001 FR 0108581
(43) Date de publication de la demande: 07.04.2004
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: HUBBE, Pascal, F-75014 Paris (FR); GOBIN, Pierre, F-38000 Grenoble (FR)
(74) Mandataire: Feray, Valérie
(86) Numéro de dépôt international: PCT/FR2002/002143
(87) Numéro de publication internationale: WO 2003/003701

(56) Documents cités:
- EP-A- 0 901 263
- GB-A- 2 308 038
- US-A- 5 630 159

## Description

La présente invention concerne un module d'identification d'abonné pour un terminal de radiocommunications destiné à l'identification d'un premier abonné dans un système de télécommunications cellulaire.

Les terminaux de radiocommunications du type téléphones mobiles comprennent généralement un écran d'affichage, un clavier avec des touches, une mémoire, du type d'une mémoire Flash en général, prévue pour enregistrer temporairement un ou plusieurs messages SMS reçus du réseau et un processeur programmé pour fonctionner avec les touches, la mémoire et l'écran d'affichage afin d'afficher à l'écran, en réponse à au moins un appui touche, le ou les messages SMS enregistrés en mémoire.

Ils sont en outre pourvus d'une mélodie pour alerter l'abonné utilisateur de la réception d'un appel ou d'un message SMS. La généralisation de l'utilisation des téléphones mobiles s'accompagne de la diversification de la palette des services offerts aux abonnés. Ainsi est offerte de manière connue aux différents abonnés la personnalisation de la mélodie de leur téléphone mobile.

Cependant, une fois cette mélodie sélectionnée parmi une bibliothèque de mélodies préenregistrée dans une mémoire du téléphone, celle-ci s'active sur tout appel provenant du réseau sans pour autant offrir la possibilité de distinguer, par exemple, les appels provenant d'amis de ceux provenant de contacts professionnels.

Il est alors apparu intéressant de chercher une solution permettant à l'abonné d'avoir des informations relatives à ces appels entrants à des fins notamment de filtrage. En outre, il est également apparu particulièrement intéressant de proposer une solution universelle de portage de ces informations lorsque l'abonné change de terminal.

La demande GB 2 308 038 A décrit un téléphone permettant d'identifier un appelant à l'aide du signal de sonnerie.

L'invention vise donc à résoudre le problème de la distinction des appels entrants et messages textes SMS et ceci dans un contexte de portabilité universelle permettant de conserver ce moyen de distinction lors du changement de terminal de radiocommunications.

A cet effet, l'invention a pour objet un module d'identification d'abonné pour un terminal de radiocommunications destiné à l'identification d'un premier abonné dans un système de télécommunications cellulaire, caractérisé en ce que ledit module comprend un premier fichier de personnalisation de mélodies aptes à spécifier la mélodie à jouer parmi une bibliothèque de mélodies prédéterminée par des moyens de restitution sonore du terminal lorsqu'un second abonné relié au réseau tente d'entrer en contact avec le premier abonné.

Ainsi, lors de la réception d'un appel ou d'un message texte SMS, l'abonné est prévenu par ladite mélodie de la tentative d'appel spécifique au second abonné.

En outre, le fichier de personnalisation de mélodies étant dans le module d'identification d'abonné, celui-ci est transposable lors du changement de terminal, étant donné que le module d'identification est généralement une carte à puce ou un jeton à puce amovible.

De cette sorte, si l'abonné utilisateur a personnalisé la mélodie correspondant au second abonné, cette personnalisation ne sera pas perdue lors du transfert du module d'identification d'un terminal de radiocommunications à un autre. En outre, l'invention offre la possibilité de lier chaque abonné mémorisé à une mélodie qui lui sera dédiée.

Selon un mode de réalisation, le fichier de personnalisation de mélodies comprennent des moyens d'identification de la localisation des mélodies.

Selon un mode de réalisation, lesdits moyens d'identification de localisation des mélodies proposent une indication de localisation sur ledit module , sur le terminal et/ou une absence de mélodie entraînant l'activation du mode vibreur du terminal par défaut.

Selon un mode de réalisation, lesdits moyens de personnalisation de mélodies comportent des moyens d'identification de groupes de numéros de téléphone, chaque groupe ayant une mélodie particulière, l'appartenance du second abonné à l'un de ces groupes attribuant la mélodie associée audit groupe.

Selon un mode de réalisation, les informations de mélodies sont codées selon un schéma de codage prédéterminé.

L'invention a également pour objet un terminal de radiocommunications pour la radiocommunication dans un système de télécommunications cellulaire, caractérisé en ce que le terminal comporte un module selon l'invention.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
Figure 1 : la représentation schématique de l'architecture d'un téléphone mobile,
Figure 2 : une structure d'arborescence de fichiers dans le fichier répertoire maître du module selon un mode de réalisation de l'invention.
Figure 3 : une structure d'arborescence de fichiers dans le fichier répertoire d'applications du module selon un mode de réalisation de l'invention.

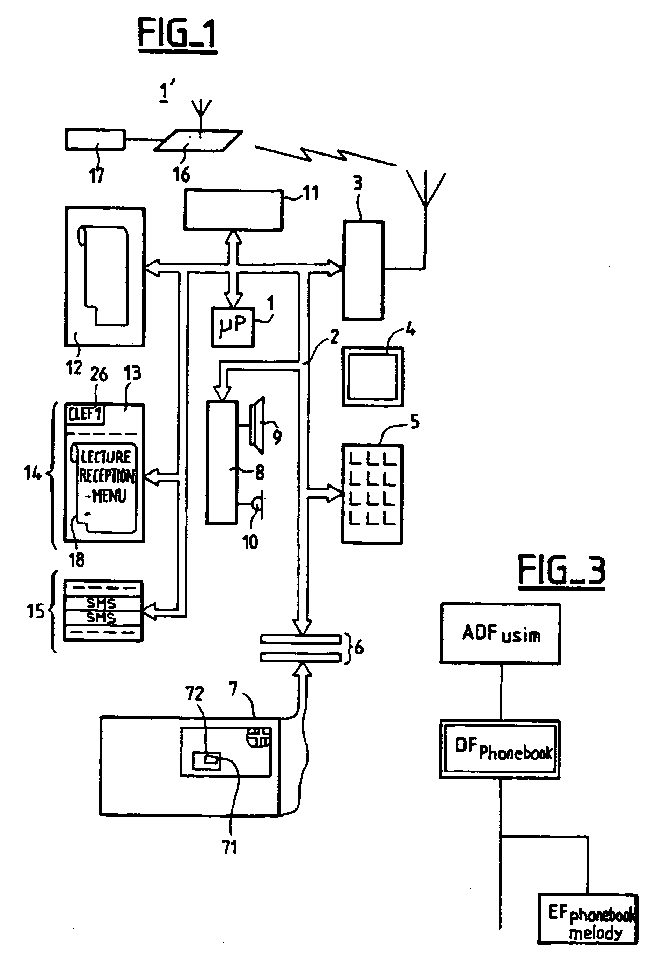

La figure 1 montre un téléphone mobile 1'. Il comporte essentiellement un microprocesseur 1 relié par un bus 2 à un ensemble de circuits. Ces circuits comportent essentiellement un émetteur/récepteur 3 radioélectrique, un écran de visualisation 4, un clavier de commande 5, une interface 6 d'échange avec un module 7 d'identification d'abonné selon l'invention. Dans un exemple, le module 7 est contenu dans une carte à puce ou dans un jeton à puce. Le microprocesseur 1 est encore en relation avec des circuits de traitement de la parole 8 connectés d'une part à un haut-parleur 9 et à un microphone 10. Le bus 2 est encore en relation avec un jeu de mémoires. On a ainsi repréenté une mémoire de travail 11 par exemple de type dynamique, une mémoire programme 12 de préférence non volatile, et une mémoire de données 13 notamment de type Flash Eprom, non volatile, programmable et effaçable. La mémoire 13 contient le système d'exploitation du microprocesseur 1. La mémoire 13 peut comporter une partie 14 pré-programmée à la livraison du téléphone mobile à un client et une partie 15 programmable au fur et à mesure de l'utilisation du téléphone.

Toute autre architecture est cependant envisageable. La partition des mémoires est en effet ici uniquement indicative.

L'utilisation du téléphone mobile est envisageable dans tout type de système de télécommunications cellulaire, du type de celui à la norme GSM ("Global System for Mobile communications" en langue anglaise) ou UMTS ("Universal Mobile Telecommunications System" en langue anglaise) par exemple.

Le module d'identification d'abonné, usuellement appelé SIM ("Subscriber Identification Module" en langue anglaise) ou USIM ("Universal Subscriber Identification Module" en langue anglaise) dans la norme UMTS, comprend un tableau 71 de services mémorisé dans un ensemble mémoire 72 du module 7, ensemble mémoire appelé dans la suite de la demande mémoire 72.

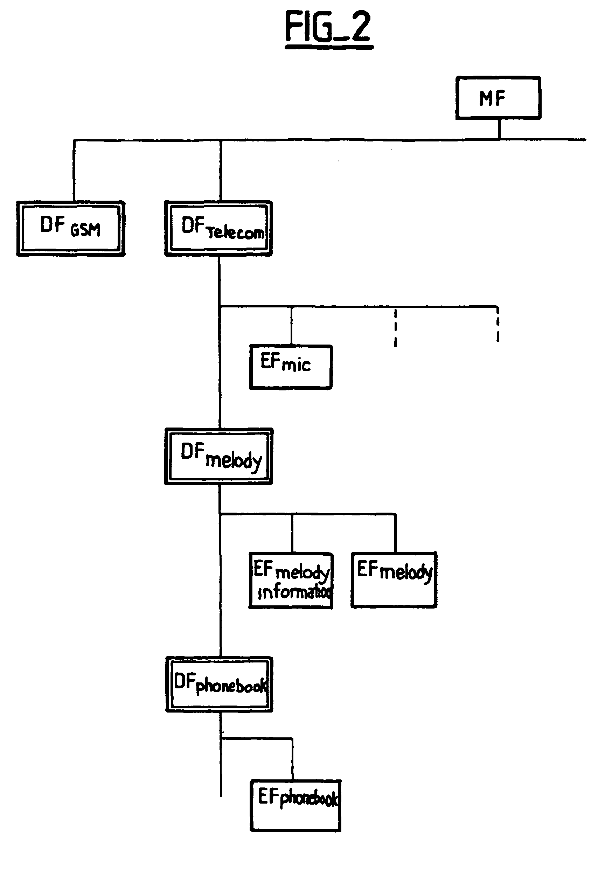

La figure 2 décrit plus spécifiquement la structure arborescente des fichiers enregistrés dans la mémoire 72 du module, selon un mode de réalisation de l'invention.

Un fichier MF principal ("Master File" en langue anglaise)comprend une pluralité de sous-fichiers qui sont des fichiers répertoires et fichiers élémentaires, un fichier répertoire étant un fichier parent d'un fichier élémentaire. Parmi les sous-fichiers du fichier MF, il est illustré sur la figure 2 les fichiers DF telecom qui peut comprendre par exemple, non schématisé, le fichier élémentaire EFpl ("Elementary File for preferred languages" en langue anglaise) regroupant les données sur les langues préférées de l'utilisateur, etc.

Le fichier DFtelecom comprend lui-même le fichier DFgraphique parent du fichier Efimage (non schématisé), le fichier élémentaire EFmic ("Elementary File for melody related for incoming calls" en langue anglaise) comprenant les données relatives aux mélodies liées aux appels entrants, le fichier répertoire DFmelody parent des fichiers Efmelodyinformation regroupant des informations de mélodies et Efmelodydata regroupant les données de mélodies elles-mêmes, comme on le verra dans la suite. Le fichier DFtelecom comprend en outre un fichier Dfphonebook (pour répertoire téléphonique en anglais) parent du fichier élémentaire Efphonebookmelody (pour mélodie du répertoire téléphonique).

Selon le présent mode de réalisation, les fichiers élémentaires contenus dans le fichier répertoire DFmelody contiennent des informations de mélodies. Ce fichier répertoire n'est pas nécessairement lié directement à l'entrée du fichier répertoire téléphonique. En effet, elle peut être utilisée directement par une interface homme-machine du terminal. Cependant, dans le présent mode de réalisation, on prendra comme hypothèse que DFmelody est relié à DFphonebook.

Il va être décrit dans un premier temps le contenu et la fonction du fichier EFmic. Ce fichier contient des numéros de téléphone liés à leurs mélodies correspondantes. Il comporte, pour des numéros appelants connus, des identifiants pour localiser chacune des mélodies coorrespondantes et des identifiants propres aux mélodies elles-mêmes, celles-ci étant stockées dans la carte SIM, en l'occurrence dans le fichier EFmelodydata (elles peuvent être stockées dans le terminal, tout au moins pour certaines, selon un autre mode de réalisation non décrit). Le fichier comporte également des moyens permettant l'affichage de l'origine des appels entrants, par exemple le nom et/ou prénom de la personne enregistrée appelante, grâce à la liaison avec DFphonebook.

Dans le cas où l'appel entrant correspond à une entrée du répertoire (c'est-à-dire que l'appel entrant est connu), la mélodie enregistrée dans le fichier EFmelodydata est utilisée seulement si aucune mélodie n'est déjà associée à cette entrée du répertoire (c'est-à-dire si l'utilisateur ou le fabricant du terminal n'a pas déjà préenregistré localement sur le terminal une mélodie pour cet appel entrant).

Comme déjà dit, le fichier Efmic contient des informations de localisation de mélodie adressant le dispositif ou l'endroit où se trouve l'information de mélodie. Par exemple, l'adresse peut être celle située sur la carte SIM ou celle d'un espace mémoire dans le terminal. Le type de codage pour coder cette adresse peut être le suivant :
"00" pour une mélodie se situant dans la carte SIM,
"O1" pour une mélodie se trouvant dans un espace mémoire du terminal lui-même,
"02" pour indiquer que le mode vibreur doit être utilisé comme mélodie par défaut.

En ce qui concerne l'identifiant de mélodie, celui ci comporte une adresse adressant un enregistrement dans le fichier EFmelodydata si la localisation de la mélodie est fixée à 00. Sinon le contenu de l'identifiant de mélodie adresse le numéro de la mélodie stocké dans le terminal si la localisation de mélodie est fixée à 01. En dernier lieu, l'identifiant de mélodie sera fixé à FF par exemple et ne sera pas interprété par le terminal si la localisation de mélodie est fixée à 02. Si le terminal ne propose pas de mode vibreur, la mélodie par défaut du terminal sera utilisée.

Le fichier EFmic peut également contenir un identifiant de nom de groupe dont le contenu indique si le numéro de téléphone fait partie d'un groupe prédéterminé. Dans ce cas, l'identifiant contient une référence au nom du groupe. De cette sorte, lorsqu'un appel entrant correspondra à un numéro de téléphone appartenant à un groupe (une tribu d'amis par exemple), le nom du groupe pourra être affiché par des moyens connus en soi sur l'écran de téléphone.

Il va être décrit maintenant le contenu de la fonction du fichier DFmelodie.

Chaque enregistrement du fichier élémentaire EFmelodyinformation identifie les différents modes d'une mélodie particulière, une mélodie étant identifiée par le numéro d'enregistrement de cette mélodie.

Les modes de mélodie peuvent être différents selon la façon avec laquelle ils sont codés, utilisant l'un des schémas de codage de mélodie proposés par le logiciel du terminal. Ainsi, une mélodie peut être codée selon deux modes, le premier en monophonie et le second en polyphonie. Par exemple, la k-ième mélodie représente une mélodie de société pour laquelle il y a i modes, chacun d'eux étant encodé selon un schéma de codage différent. Ainsi, les i modes de la mélodie de société sont décrits dans l'enregistrement k du fichier EFmelodyinformation.

Ainsi le fichier EFmelodyinformation contient une information de correspondances au nombre de modes de mélodies. Le contenu de cette information est un bit donnant effectivement le nombre de modes de mélodie, ce bit pouvant être codé en binaire.

Le fichier EFmelodyinformation contient de cette sorte un descripteur de modes de mélodie dont le contenu donne une description du mode de mélodie. Comme expliqué, par mode de mélodie, on entend le schéma de codage de la mélodie concernée. Le codage de ce descripteur comprend un premier bit pour identifier le schéma de codage de mélodie qui a été utilisé pour encoder ledit mode de mélodie. Par exemple, le mode "00" pourrait correspondre à un schéma de codage spécifique au fabricant ; 01 correspondant à un schéma de codage du type MIDI. Les bits 2 et 3 désignent un identifiant de fichier de mode de mélodie, comme on va le voir dans la suite. Ces bits identifient le fichier élémentaire EFmelodydata qui est le fichier de données du mode de mélodie comprenant les données de mélodie pour le mode en question. Les bits 4 et 5 spécifient le décalage existant entre les différents modes. Par exemple, ce décalage permettra de déterminer l'écart entre le début de la mélodie codée en monophonie et le début de la mélodie codée en polyphonie. Les bits 6 et 7 désignent la longueur des données de modes de mélodie. De façon générale, le fichier de données EFmelodydata de modes de mélodie résident sous le répertoire DFmelodie et il peut en exister plusieurs pour chacune des mélodies. Les données de modes de mélodie sont accédées en utilisant les descripteurs de modes de mélodie fournis par le fichier EFmelodyinformation, comme cité ci-dessus.

Au vu des fichiers et de la structure décrite, le terminal comprenant le module selon l'invention fonctionne de la manière suivante :

Lors de la réception d'un appel ou d'un message écrit court (du système dit "Short Messsage System" en anglais), le terminal vérifie si l'appelant est enregistré dans le fichier EFmic ou dans le répertoire et si oui, déclenche la mélodie qui lui est associé. Cette mélodie est renseignée dans le fichier DFmelodie. On notera que, lorsque plusieurs schémas de codage existent pour une même mélodie et sans informations contraires, le terminal sera programmé pour opter le codage permettant la restitution la meilleure (dans l'exemple, le mode polyphonique sera choisi).

L'appelant peut également être renseigné dans le répertoire téléphonique du terminal.

La figure 3 représente une structure d'arborescence de fichiers dans le fichier répertoire d'applications ADFusim (pour "Application Directory File" en anglais) du module 1' selon un mode de réalisation de l'invention. Dans cette configuration où le répertoire DFphonebook est directement rattaché à ADFusim, il peut être avantageux de rattacher le fichier DFphonebook directement au répertoire d'applications ADFusim comme illustré, ce qui permet d'éviter de dupliquer certaines données ou certains liens.

## Revendications

1. Module d'identification d'abonné pour un terminal (1') de radiocommunications destiné à l'identification d'un premier abonné dans un système de télécommunications cellulaire, **caractérisé en ce que** ledit module (7) comprend un premier fichier (EFmic) de personnalisation de mélodies aptes à spécifier la mélodie à jouer parmi une bibliothèque de mélodies prédéterminée par des moyens (9) de restitution sonore du terminal lorsqu'un second abonné relié au réseau tente d'entrer en contact avec le premier abonné.

2. Module selon la revendication 1, **caractérisé en ce que** le fichier de personnalisation de mélodies comprennent des moyens d'identification de la localisation des mélodies.

3. Module selon la revendication 2, **caractérisé en ce que** lesdits moyens d'identification de localisation des mélodies proposent une indication de localisation sur ledit module ou sur le terminal .

4. Module selon la revendication 3, **caractérisé en ce que** lesdits moyens de personnalisation de mélodies comportent des moyens d'identification de groupes de numéros de téléphone, chaque groupe ayant une mélodie particulière, l'appartenance du second abonné à l'un de ces groupes attribuant la mélodie associée audit groupe.

5. Module selon la revendication 4, **caractérisé en ce que** les informations de mélodies sont codées selon un schéma de codage prédéterminé.

6. Terminal de radiocommunications pour la radiocommunication dans un système de télécommunications cellulaire, **caractérisé en ce que** le terminal comporte un module selon l'une des revendications 1 ou 6.

## Claims

1. A subscriber identification module for a radiocommunications terminal (1') intended for identifying a first subscriber in a cellular telecommunications system, **characterized in that** said module (7) comprises a first file (EFmic) for customizing melodies, capable of specifying the melody to be played from a predetermined melody library by sound reproduction means (9) when a second subscriber connected to the network attempts to contact the first subscriber.

2. The module according to claim 1, **characterized in that** the melody customization file comprises means for identifying the localization of these melodies.

3. The module according to claim 2, **characterized in that** said identification means for melody localization propose an indication of localization on said module or on the terminal.

4. The module according to claim 3, **characterized in that** said means for customizing melodies include means for identifying groups of telephone numbers, each group having a particular melody, the fact that the second subscriber belongs to one of these groups assigning the melody associated with said group.

5. The module according to claim 4, **characterized in that** the melody information is ceded according to a predetermined coding scheme.

6. A radiocommunications terminal for radiocommunications in a cellular telecommunications system, **characterized in that** the terminal includes a module according to any of claims 1 or 6.

## Patentansprüche

1. Teilnehmeridentifikationsmodul für ein Funkkommunikationsendgerät (1'), das vorgesehen ist für die Identifikation eines ersten Teilnehmers in einem zellularen Funkkommunikationssystem, **dadurch gekennzeichnet, dass** das Modul (7) eine erste Datei (EFmic) zur Personalisierung von Melodien umfasst, geeignet, um die durch Schallwiedergabemittel (9) des Endgeräts zu spielende Melodie aus einer vorgegebenen Bibliothek von Melodien, wenn ein zweiter mit dem Netz verbundener Teilnehmer versucht, mit dem ersten Teilnehmer in Kontakt zu treten, zu spezifizieren.

2. Modul nach Anspruch 1, **dadurch gekennzeichnet, dass** die Datei zur Personalisierung von Melodien Mittel zur Identifikation der Lokalisierung der Melodien umfasst.

3. Modul nach Anspruch 2, **dadurch gekennzeichnet, dass** die Mittel zur Identifikation der Lokalisierung der Melodien eine Lokalisierungsangabe auf dem Modul oder auf dem Endgerät vorschlagen.

4. Modul nach Anspruch 3, **dadurch gekennzeichnet, dass** die Mittel zur Personalisierung von Melodien Mittel zur Identifikation von Gruppen von Telefonnummern umfassen, wobei jede Gruppe eine eigene Melodie hat, und die Zugehörigkeit des zweiten Teilnehmers zu einer dieser Gruppen die dieser Gruppe zugeordnete Melodie zuweist.

5. Modul nach Anspruch 4, **dadurch gekennzeichnet, dass** die Melodieinformationen nach einem vorgegebenen Codierschema codiert sind.

6. Funkkommunikationsendgerät für die Funkkommunikation in einem zellularen Telekommunikationssystem, **dadurch gekennzeichnet, dass** das Endgerät ein Modul nach einem der Ansprüche 1 bis 5 umfasst.
